# FASCICULE DE BREVET EUROPEEN

(11) **EP 0 911 600 B1**
(45) Date de publication et mention de la délivrance du brevet: **26.03.2003**
(21) Numéro de dépôt: 98402610.4
(22) Date de dépôt: 20.10.1998
(51) Int. Cl.: F41F 3/042

(54) **Dispositif de retenue notamment de l'allumeur arrière d'un missile**
Haltevorrichtung für Raketenbodenanzünder
Device for retaining the igniter at the rear of a missile

(30) Priorité: 20.10.1997 FR 9713097
(43) Date de publication de la demande: 28.04.1999
(73) Titulaire: Thales, 75008 Paris (FR)
(72) Inventeur: Peltier, Guy, Thomson-CSF P.I.dept.Prot.et Conseil, 94117 Arcueil cedex (FR); Goillot, Paul, Thomson-CSF P.I.dept.Pr.et Conseil, 94117 Arcueil cedex (FR); Gouthiere, André, Thomson-CSF P.I.dep.Pr.et Consei, 94117 Arcueil cedex (FR); Koenig, Gérard, Thomson-CSF P.I.dept.Pr.et Conseil, 94117 Arcueil cedex (FR)

(56) Documents cités:
- FR-A- 1 336 054
- FR-A- 2 685 463
- US-A- 4 426 909
- US-A- 4 522 103
- US-A- 4 676 136
- US-A- 5 491 917

## Description

La présente invention concerne un dispositif de retenue d'un élément éjecté par un engin pyrotechnique à sa mise à feu. Elle s'applique notamment pour la retenue de l'allumeur arrière d'un missile. Plus généralement, elle s'applique pour tout engin pyrotechnique à éjection arrière d'éléments tels que l'allumeur, le boulon explosif, le booster, les patins ou les couvercles.

Lors de la phase de mise à feu d'un engin pyrotechnique tel que le propulseur d'un missile par exemple, l'allumeur du propulseur est éjecté à grande vitesse vers l'arrière et possède une énergie cinétique telle que l'éjection peut causer des dégâts humains ou matériels très importants.

Pour se protéger des éléments projetés, il est envisageable de disposer un système extérieur à la munition, voir le document US-A-4 522 103, dit « sur rampe ». Cependant un tel système présente plusieurs inconvénients. Un exemple d'inconvénients parmi d'autres provient notamment du fait que la rampe ne peut pas être trop rapprochée de l'arrière de l'engin. Etant relativement éloignée, les éléments la percutent avec une énergie cinétique d'autant plus élevée. En conséquence, la rampe doit avoir une masse suffisamment importante car il faut plus de matériau pour absorber l'énergie. Il en résulte alors une très grande complexité au niveau des servo-mécanismes de commande de la rampe. Par ailleurs, le relatif éloignement de la rampe n'assure pas toujours une capture fiable des éléments projetés.

Une autre solution peut par exemple consister à supprimer les éjections. Pour éviter des éjections arrières d'un engin pyrotechnique, il est possible d'effectuer l'allumage de son propulseur vers l'avant. Dans ce cas, voir le document US-A-4 426 909, les éléments pyrotechniques sont intégrés au moment de l'assemblage du missile, avec les risques associés à une manutention et à des tests d'éléments explosifs armés effectués en usines.

La mise en place de l'allumeur à l'arrière du propulseur en phase finale d'intégration minimise les risques pyrotechniques notamment en usine, mais entraîne l'éjection de celui-ci au moment de la mise à feu. En plus des effets de flamme, les structures, situées à l'arrière de la ligne de tir, reçoivent comme il a été évoqué précédemment les projectiles constitués par les éléments éjectés. Ceux-ci, compte tenu de leur grande vitesse, supérieure à 100 m/s, peuvent posséder une énergie cinétique de plusieurs centaines de joules. Ces projectiles peuvent donc causer des dégâts importants aux structures avoisinantes voire occasionner des blessures aux opérateurs, même protégés, à cause notamment des risques de ricochets impossibles à contrôler.

Pour éviter les risques associés à ce type d'engins pyrotechniques pendant la phase de tir tout en gardant les avantages associés à une mise à feu par l'arrière sans utiliser de rampe de réception des éléments éjectés, il faut capturer ces éléments par un dispositif de retenue solidaire du conteneur de l'engin. Dans le cas d'application à un missile par exemple, le dispositif de capture doit notamment répondre aux exigences suivantes :
- les éléments pyrotechniques doivent être capturés et maintenus captifs pendant la phase de départ du missile, c'est-à-dire dans un intervalle de temps d'environ 0,2 secondes ;
- la tuyère et l'arrière du missile doivent être rapidement dégagés du missile d'environ 100 mm, par exemple en moins de 5 ms, mais la course doit rester compatible des gabarits engagés ;
- le dispositif de capture ne doit pas engendrer de dégradations ou de perturbations pouvant entraîner une défaillance de tir, en outre les efforts de retenue doivent être compatibles des capacités de compensation des servomécanismes de la tourelle lance missiles ;
- il doit être capable de supporter les contraintes d'environnement de la munition, c'est-à-dire du missile et de son conteneur.

Le but de l'invention est de permettre la réalisation d'un dispositif répondant notamment aux exigences précédentes, à cet effet, l'invention a pour objet un dispositif de retenue d'un élément éjecté par un engin pyrotechnique, caractérisé en ce qu'il comporte au moins une coupelle métallique placée derrière la tuyère de l'engin et destinée à recevoir l'élément éjecté, la coupelle étant maintenue en position par des liaisons rigides courbes, l'énergie cinétique de l'élément éjecté entraînant la coupelle et l'élément capturé, le mouvement de l'ensemble étant freiné par la déformation des liaisons rigides.

L'invention a pour principaux avantages qu'elle permet d'obtenir un dispositif sous forme de kit réglé prêt à l'emploi, que le dispositif peut être monté sur un engin au moment de l'intégration finale des éléments pyrotechniques, que le dispositif peut fonctionner dans des conditions très sévères et qu'il présente une très grande sûreté de fonctionnement, que le dispositif peut être monté sur un missile ou tout autre engin pyrotechnique déjà réalisé mais non équipé d'un système de retenue, et que la réalisation et le montage du dispositif est économique.

D'autres caractéristiques et avantages de l'invention apparaîtront à l'aide de la description qui suit faite en regard de dessins annexés qui représentent :
- la figure 1, un exemple de réalisation possible d'un dispositif selon l'invention ;
- la figure 2, l'exemple de réalisation précédent par une vue suivant AA de la figure 1, associé aux éléments d'un élément pyrotechnique ;
- la figure 3, un dispositif selon l'invention en position déployée ;
- la figure 4, un exemple de réalisation possible d'une coupelle utilisée dans un dispositif selon l'invention ;
- la figure 5 , l'exemple de réalisation précédent par une vue suivant BB de la figure 4.

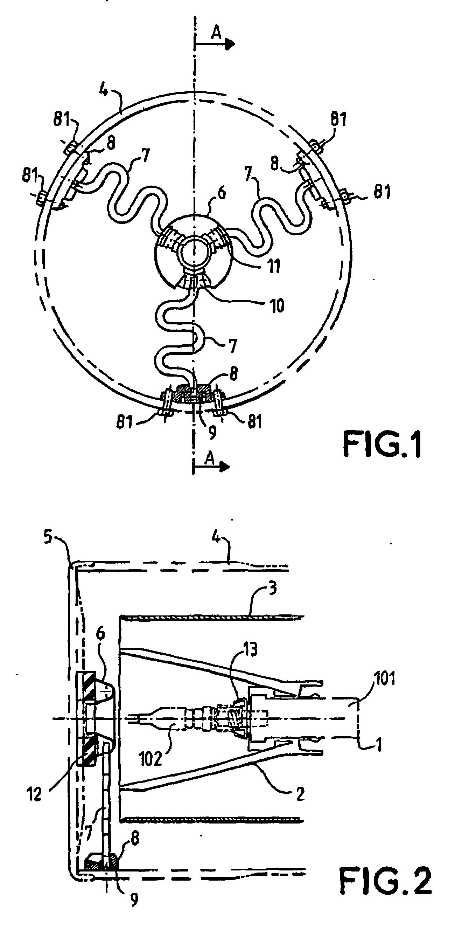

Les figures 1 et 2 présentent un exemple de réalisation possible d'un dispositif selon l'invention, pour retenir l'allumeur 1 d'un engin pyrotechnique 3, par exemple un missile, lors de la phase de mise à feu. L'allumeur possède en fait une partie 101 qui fond durant sa phase opérationnelle, cette partie étant la charge pyrotechnique de l'allumeur, et une partie solide qui comprend essentiellement son connecteur 102, par lequel il est relié par un câble non représenté au connecteur général du missile. C'est par ce câble et ce connecteur 102 qu'est transmis l'ordre de mise à feu. La partie de l'allumeur qui est éjectée est en fait la partie de l'allumeur qui reste solide puisque sa charge pyrotechnique 101 est consommée pour la mise à feu. L'allumeur 1 est généralement éjecté avec une vitesse supérieure à 100 m/s et donc avec une énergie très importante. Par la suite, l'engin pyrotechnique considéré est, à titre d'exemple, le propulseur d'un missile.

Un dispositif selon l'invention comporte une coupelle métallique 6 placée derrière la sortie de la tuyère 2 du missile 3. La section du missile et la coupelle sont sensiblement concentriques. La coupelle 6 est destinée notamment à recevoir l'allumeur 1 lors de son éjection vers l'arrière. Un tampon amortisseur 12 sert par exemple d'entretoise entre la coupelle 6 et le capot arrière 5 au conteneur 4 missile. La coupelle est maintenue en position au moyen de liaisons rigides courbes 7, par exemple métalliques. Ces liaisons courbes ont par exemple la forme de serpentins. Elles sont par exemple au nombre de trois. Par la suite, il est fait référence à des serpentins, mais toute autre forme de lignes courbes reste possible. Les serpentins sont réalisés dans un matériau qui résiste notamment à une très forte chaleur due en particulier à l'effet de flamme. Un serpentin 7 est relié au conteneur 4 par un support 8. La fixation d'un support sur le conteneur se fait par exemple par vis 81. Une étanchéité de cette fixation est obtenue par un collage identique aux autres étanchéités du conteneur.

Lors de la mise à feu du missile 3, l'arrivée de l'allumeur 1 dans la coupelle 6 provoque la rupture du capot arrière 5 et libère le déploiement du dispositif de retenue selon l'invention. L'énergie cinétique de l'allumeur 1 et la pression des gaz venant de la tuyère 2 entraîne la coupelle 6 et l'allumeur 1 capturé par cette dernière. Le mouvement de l'ensemble est freiné par la déformation des serpentins 7 qui s'allongent au cours de ce mouvement. La forme courbe du serpentin lui permet de ne travailler qu'en traction au cours du déploiement, et d'éviter ainsi des rupture en flexion. Le matériau du serpentin est cependant par exemple de faible résistance à la rupture de façon à obtenir un allongement le plus important possible. A cet effet, les serpentins sont par exemple en acier doux.

Chaque serpentin 7 coopère avec la coupelle 6 et avec son support 8 sur le conteneur par des articulations qui minimisent les risques de flexions parasites, donc les risques de ruptures par ces flexions. A cet effet, un serpentin est articulé par des tourillons 9, 10 au niveau de son support 8 et de la coupelle 6. De la sorte, lors du déploiement des serpentins 7, ceux-ci s'articulent selon un mouvement de rotation par rapport à la coupelle et au support sans risque de rupture par flexion, puisque les mouvements de rotations leurs permettent de s'étendre sensiblement parallèlement à la poussée due à l'éjection de l'allumeur et aux gaz. Les tourillons d'articulation 9, 10 sont par exemple taraudés perpendiculairement à leur axe de rotation, les extrémités des serpentins étant alors vissés dans ces trous. Pour un serpentin 7, le tourillon 9 de la première articulation oscille dans le support 8 fixé sur le conteneur et le tourillon 10 de la deuxième articulation oscille dans une noix 11 coincée dans la coupelle 6, du côté de la coupelle opposé à l'allumeur 1. Ces oscillations se font selon un axe sensiblement perpendiculaire à la tangente à la liaison rigide 7 au point de rencontre de cette dernière avec les tourillons.

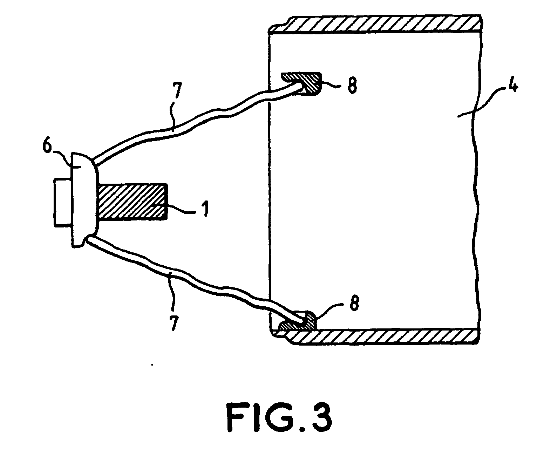

La figure 3 présente le dispositif selon l'invention tel que décrit relativement aux figures 1 et 2 en position déployée, une fois la mise à feu terminée. L'allumeur 1 a été capturé par la coupelle 6. Les serpentins, dont deux sur trois sont représentés, sont dans leur position allongée. L'allumeur est retenu par la coupelle 6 et les serpentins 7, eux-mêmes restés solidaires du conteneur 4 par l'intermédiaire de leur articulation sur les supports 8.

La figure 2 montre que le connecteur 102 de l'allumeur est par exemple équipé d'une cloche 13 destinée à amortir le choc d'arrivée de l'allumeur 1 sur la coupelle 6. Pour augmenter l'effet d'amortissement, la cloche est par exemple fendue. La cloche 13 aide par ailleurs à guider et à maintenir l'allumeur 1 dans la coupelle et à éviter ainsi des rebonds. Le câble de transmission de l'ordre d'allumage, non représenté, reliant le connecteur de l'allumeur au connecteur général du missile passe par exemple à travers la coupelle pour faciliter encore le guidage du connecteur 102 de l'allumeur dans la coupelle 6.

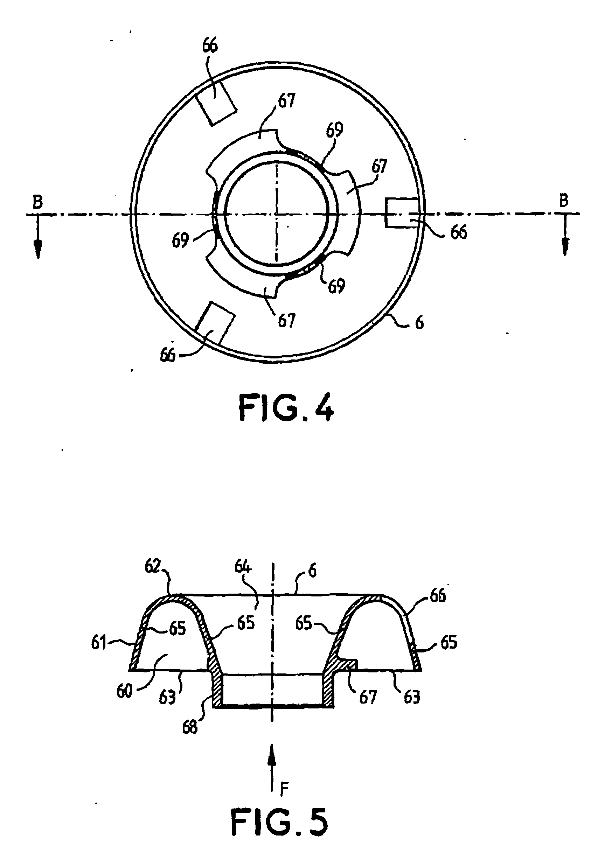

Les figures 4 et 5 présentent un exemple de réalisation de la coupelle 6. La figure 5 est une vue en coupe selon BB de la figure 4, cette dernière étant une vue suivant F de la figure 5. La forme de la coupelle permet notamment de faciliter la capture et le maintien de l'allumeur pendant la phase de déploiement. Sa forme possède par ailleurs des propriétés aérodynamiques destinées à minimiser les efforts de traînée. De plus, alors qu'il serait néanmoins plus simple de réaliser une pièce pleine, une forme de coupelle, c'est-à-dire une forme en creux de révolution 60 dont l'ouverture est opposée à l'allumeur 1, a été adoptée de façon à optimiser le poids de la coupelle, celle-ci ne devant pas être trop lourde pour se dégager rapidement.

La coupelle a une forme à symétrie de révolution et présente par ailleurs une forme intérieure d'entonnoir 64 pour accueillir l'allumeur 1. La section 61 de la coupelle présente un sommet arrondi 62 en regard de l'allumeur 1. Une partie cylindrique 68 dépasse de sa base 63 à l'opposé de son sommet 62, en guise de terminaison de l'entonnoir 64, ce qui rend notamment plus fiable le maintien de l'allumeur 1 dans la coupelle 6. Les sections 65 de la coupelle 6 qui vont de la base 63 au sommet 62 sont par exemple rectilignes.

La coupelle 6 présente des ouvertures 66 pour permettre le passage des serpentins 7, et plus particulièrement le passage des extrémités des serpentins fixées aux tourillons 10 des articulations. Une bague 67, qui entoure par exemple la partie cylindrique précitée 68 de la coupelle, sert notamment à bloquer les noix 11 qui coopèrent avec les tourillons 10. La bague 67 possède des rétrécissements 69 pour laisser passer les noix 11, celles-ci étant par la suite bloquées entre la face intérieure de la coupelle et les parties larges de la bague 67. Le montage d'une noix 11 puis d'un serpentin 7 peut alors par exemple s'effectuer en plaçant la noix entre la bague 67 et la face intérieure de la coupelle, en présentant son trou taraudé en regard de l'ouverture 66 de la coupelle, puis en vissant l'extrémité du serpentin 7 dans ce trou taraudé à travers l'ouverture 66. En outre, la noix 11 assure une bonne étanchéité des articulations. Cela évite notamment un effet dit de cheminée, c'est-à-dire le passage de la flamme lors de la mise à feu, cela évite donc des fusions locales et permet une retenue dans la flamme du propulseur pour une durée supérieure à 200 ms. L'épaisseur de la section 61 de la coupelle permet à la fois de minimiser son poids, afin d'être dégagée rapidement comme il a été indiqué ci-dessus, et de lui donner une tenue mécanique et thermique. A cet effet, la coupelle étant en acier, son épaisseur est par exemple de l'ordre du millimètre. La coupelle est par exemple en acier inoxydable, à hautes caractéristiques mécaniques.

Le dispositif selon l'invention peut être utilisé dans des conditions sévères. En particulier, en ce qui conceme par exemple des chocs mécaniques d'accostage et de départ d'autres missiles, ou encore l'environnement en vibrations pour le transport, la tenue mécanique est obtenue par le maintien de la coupelle 6 par les serpentins 7. Les serpentins sont à cet effet par exemple en légère tension et sont en butée sur les supports 8 fixés sur le conteneur 4. Le tampon amortisseur 12 complète le maintien tout en amortissant les vibrations. Le choix des matériaux des composants d'un dispositif selon l'invention lui permettent en outre de résister notamment à des gaz corrosifs ou des chocs thermiques.

Un dispositif selon l'invention présente par ailleurs une grande sûreté de fonctionnement, grâce notamment à une bonne étanchéité de certaines parties, par exemple au niveau des articulations comme décrit précédemment, grâce à son dégagement rapide de la sortie de la tuyère ainsi qu'à sa grande déformation géométrique qui éloigne l'élément retenu relativement loin de la tuyère.

Un dispositif selon l'invention peut être livré sous forme de kit pour être installé notamment sur des missiles déjà intégrés dans des conteneurs ou des batteries opérationnelles. Plus généralement, il peut être monté sur tout missile ou tout engin pyrotechnique déjà réalisé mais non pourvu d'un système de retenue. Un kit comporte par exemple un ensemble constitué des serpentins 7 articulés autour de la coupelle 6 et des supports 8, ces demiers étant destinés à être par exemple fixés sur le conteneur d'un missile. Le kit comporte en outre par exemple le tampon amortisseur 12 et la cloche 13. Le kit étant réglé en usine, sa mise en place peut alors être réalisée par perçage du tube du conteneur pour fixer notamment les supports 8 des serpentins, puis par collage du capot arrière et des étanchéités. Une telle opération ne demande que quelques minutes. Elle n'est donc pas coûteuse.

Le dispositif selon l'invention a été décrit à titre d'exemple pour la retenue d'un allumeur, il peut cependant s'appliquer pour d'autres éléments éjectés par des engins pyrotechniques, tels que par exemple des boulons explosifs ou des boosters.

## Revendications

1. Dispositif de retenue d'un élément éjecté par un engin pyrotechnique à sa mise à feu, **caractérisé en ce qu'**il comporte au moins une coupelle métallique (6) placée derrière la tuyère (2) de l'engin (3) et destinée à recevoir l'élément éjecté (1), la coupelle étant maintenue en position par des liaisons rigides courbes (7), l'énergie cinétique de l'élément capturé (1) entraînant la coupelle (6) et l'élément capturé (1), le mouvement, de l'ensemble étant freiné par la déformation des liaisons rigides (7).

2. Dispositif selon la revendication 1, **caractérisé en ce que** les liaisons rigides (7) ont la forme de serpentins.

3. Dispositif selon l'une quelconque des revendications précédentes, **caractérisé en ce que** les liaisons rigides (7) présentent une faible résistance à la rupture.

4. Dispositif selon la revendication 3, **caractérisé en ce que** les liaisons rigides (7) sont en acier doux.

5. Dispositif selon l'une quelconque des revendications précédentes, **caractérisé en ce que** la coupelle (6) est maintenue par trois liaisons rigides (7).

6. Dispositif selon l'une quelconque des revendications précédentes, **caractérisé en ce que** l'engin (3) étant placé dans un conteneur (4), un tampon amortisseur (12) est placé entre la coupelle (6) et le capot (5) du conteneur.

7. Dispositif selon l'une quelconque des revendications précédentes, **caractérisé en ce que** la coupelle (6) et la section de l'engin (3) sont sensiblement concentriques.

8. Dispositif selon l'une quelconque des revendications précédentes, **caractérisé en ce que** l'engin étant placé dans un conteneur (4), une liaison rigide (7) est reliée au conteneur par un support (8), une liaison rigide coopérant avec le support par un tourillon (9) oscillant dans le support (8), l'oscillations se faisant selon un axe sensiblement perpendiculaire à la tangente à la liaison rigide (7) au point de rencontre de cette dernière avec le tourillon (9).

9. Dispositif selon la revendication 8, **caractérisé en ce que** l'extrémité de la liaison rigide (7) est vissée dans un trou taraudé effectué dans le tourillon (9), le trou étant sensiblement perpendiculaire à l'axe de rotation du tourillon.

10. Dispositif selon l'une quelconque des revendications précédentes, **caractérisé en ce qu'**une liaison rigide (7) coopère avec la coupelle (6) par un tourillon (10) oscillant dans une noix (11) solidaire de la coupelle, l'oscillations se faisant selon un axe sensiblement perpendiculaire à la tangente à la liaison rigide (7) au point de rencontre de cette dernière avec le tourillon (10).

11. Dispositif selon la revendication 10, **caractérisé en ce que** l'extrémité de la liaison rigide (7) est vissée dans un trou taraudé effectué dans le tourillon (10), le trou étant sensiblement perpendiculaire à l'axe de rotation du tourillon.

12. Dispositif selon l'une quelconque des revendications 10 ou 11, **caractérisé en ce que** la coupelle (6) présente une ouverture (66) pour laisser passer l'extrémité de la liaison rigide (7).

13. Dispositif selon l'une quelconque des revendications 10 à 12, **caractérisé en ce qu'**une bague (67) sert à bloquer les noix (11) qui coopèrent avec les tourillons (10).

14. Dispositif selon la revendication 13, **caractérisé en ce que** la bague (67) présente des rétrécissements (68) pour permettre le passage des noix (11) lors de leur montage.

15. Dispositif selon l'une quelconque des revendications précédentes, **caractérisé en ce qu'**il comporte une cloche (13) équipant l'élément éjecté (1) destinée à amortir le choc d'arrivée de l'élément (1) sur la coupelle (6).

16. Dispositif selon la revendication 15, **caractérisé en ce que** la cloche (13) est fendue.

17. Dispositif selon l'une quelconque des revendications précédentes, **caractérisé en ce que** la coupelle présente un creux de révolution (60) dont l'ouverture est opposée à l'élément éjecté (1).

18. Dispositif selon l'une quelconque des revendications précédentes, **caractérisé en ce que** la coupelle (6) présente une forme intérieures d'entonnoir (64).

19. Dispositif selon la revendication 18, **caractérisé en ce qu'**une partie cylindrique dépasse de sa base (63) en guise de terminaison de l'entonnoir (64).

20. Dispositif selon l'une quelconque des revendications précédentes, **caractérisé en ce que** la section (61) de la coupelle présente un sommet arrondi (62) en regard de l'élément (1).

21. Dispositif selon la revendication 20, **caractérisé en ce que** les sections (65) de la coupelle qui vont de la base (63) au sommet (62) sont rectilignes.

22. Dispositif selon l'une quelconque des revendications précédentes, **caractérisé en ce que** l'engin (3) étant placé dans un conteneur (4), les liaisons rigides (7) sont en légère tension et sont en butée sur leurs supports (8) fixés sur le conteneur (4).

23. Dispositif selon l'une quelconque des revendications précédentes, **caractérisé en ce que** l'élément (1) est l'allumeur.

24. Dispositif selon la revendication 23, **caractérisé en ce que** le câble de transmission de l'ordre d'allumage passe à travers la coupelle (6).

25. Dispositif selon l'une quelconque des revendications précédentes, **caractérisé en ce que** l'engin pyrotechnique est le propulseur d'un missile (3).

## Claims

1. Device for retaining an element ejected by a pyrotechnic device when it is fired, **characterized in that** it comprises at least one metal cup (6) placed behind the nozzle (2) of the pyrotechnic device (3) and intended to receive the ejected element (1), the cup being held in position by curved rigid links (7), the kinetic energy of the captured element (1) carrying along the cup (6) and the captured element (1), the movement of the whole being braked by the deformation of the rigid links (7).

2. Device according to Claim 1, **characterized in that** the rigid links (7) have a serpentine shape.

3. Device according to either one of the preceding claims, **characterized in that** the rigid links (7) have a low rupture strength.

4. Device according to Claim 3, **characterized in that** the rigid links (7) are made of mild steel.

5. Device according to any one of the preceding claims, **characterized in that** the cup (6) is held by three rigid links (7).

6. Device according to any one of the preceding claims, **characterized in that**, with the pyrotechnic device (3) placed in a container (4), a shock-absorbing buffer (12) is placed between the cup (6) and the cap (5) of the container.

7. Device according to any one of the preceding claims, **characterized in that** the cup (6) and the cross section of the pyrotechnic device (3) are substantially concentric.

8. Device according to any one of the preceding claims, **characterized in that**, with the pyrotechnic device placed in a container (4), a rigid link (7) is connected to the container by a support (8), a rigid link collaborating with the support via a journal (9) oscillating in the support (8), the oscillations being about an axis substantially perpendicular to the tangent to the rigid link (7) at the point where the latter meets the journal (9).

9. Device according to Claim 8, **characterized in that** the end of the rigid link (7) is screwed into a tapped hole made in the journal (9), the hole being substantially perpendicular to the axis of rotation of the journal.

10. Device according to any one of the preceding claims, **characterized in that** a rigid link (7) collaborates with the cup (6) via a journal (10) oscillating in an insert (11) secured to the cup, the oscillations being about an axis substantially perpendicular to the tangent to the rigid link (7) at the point where the latter meets the journal (10).

11. Device according to Claim 10, **characterized in that** end of the rigid link (7) is screwed into a tapped hole made in the journal (10), the hole being substantially perpendicular to the axis of rotation of the journal.

12. Device according to either one of Claims 10 and 11, **characterized in that** the cup (6) has an opening (66) to allow the end of the rigid link (7) to pass.

13. Device according to any one of Claims 10 to 12, **characterized in that** a ring (67) is used to immobilize the inserts (11) which collaborate with the journal (10).

14. Device according to Claim 13, **characterized in that** ring (67) has narrowings (68) to allow the inserts (11) to pass when they are mounted.

15. Device according to any one of the preceding claims, **characterized in that** it comprises a bell housing (13) with which the ejected element (1) is equipped and which is intended to cushion the blow of the element (1) arriving on the cup (6).

16. Device according to Claim 15, **characterized in that** the bell housing (13) is split.

17. Device according to any one of the preceding claims, **characterized in that** the cup has an axisymetric hollow (60) the opening of which is on the opposite side to the ejected element (1).

18. Device according to any one of the preceding claims, **characterized in that** the cup (6) has the interior shape of a funnel (64).

19. Device according to Claim 18, **characterized in that** a cylindrical part protrudes from its base (63) in the guise of a termination of the funnel (64).

20. Device according to any one of the preceding claims, **characterized in that** the cross section (61) of the cup has a rounded top (62) facing the element (1).

21. Device according to Claim 20, **characterized in that** the sections (65) of the cup extending from the base (63) to the top (62) are straight.

22. Device according to any one of the preceding claims, **characterized in that**, with the pyrotechnic device (3) placed in a container (4), the rigid links (7) are in slight tension and are in abutment against their supports (8) fixed to the container (4).

23. Device according to any one of the preceding claims, **characterized in that** the element (1) is the igniter.

24. Device according to Claim 23, **characterized in that** the cable transmitting the ignition command passes through the cup (6).

25. Device according to any one of the preceding claims, **characterized in that** the pyrotechnic device is the motor of a missile (3).

## Patentansprüche

1. Vorrichtung zum Festhalten eines Elements, das von einer pyrotechnischen Antriebsvorrichtung bei ihrer Zündung ausgestoßen wird, **dadurch gekennzeichnet, daß** sie mindestens eine Metallschale (6) aufweist, die hinter der Düse (2) der Antriebsvorrichtung (3) angeordnet ist und das ausgestoßene Element (1) aufnehmen soll, wobei die Schale durch starre, gekrümmte Verbindungen (7) in Position gehalten wird, wobei die kinetische Energie des aufgefangenen Elements (1) die Schale (6) und das aufgefangene Element (1) mitreißt, und wobei die Bewegung dieser Gruppe durch die Verformung der starren Verbindungen (7) gebremst wird.

2. Vorrichtung nach Anspruch 1, **dadurch gekennzeichnet, daß** die starren Verbindungen (7) die Form von Schlangen aufweisen.

3. Vorrichtung nach einem der vorangehenden Ansprüche, **dadurch gekennzeichnet, daß** die starren Verbindungen (7) eine geringe Bruchfestigkeit aufweisen.

4. Vorrichtung nach Anspruch 3, **dadurch gekennzeichnet, daß** die starren Verbindungen (7) aus weichem Stahl bestehen.

5. Vorrichtung nach einem der vorangehenden Ansprüche, **dadurch gekennzeichnet, daß** die Schale (6) durch drei starre Verbindungen (7) gehalten wird.

6. Vorrichtung nach einem der vorangehenden Ansprüche, **dadurch gekennzeichnet, daß** wenn die Antriebsvorrichtung (3) in einem Behälter (4) angeordnet ist, ein Puffer (12) zwischen der Schale (6) und der Abdeckhaube (5) des Behälters angeordnet ist.

7. Vorrichtung nach einem der vorangehenden Ansprüche, **dadurch gekennzeichnet, daß** die Schale (6) und der Querschnitt der Antriebsvorrichtung (3) im wesentlichen konzentrisch sind.

8. Vorrichtung nach einem der vorangehenden Ansprüche, **dadurch gekennzeichnet, daß** wenn die Antriebsvorrichtung in einem Behälter (4) angeordnet ist, eine starre Verbindung (7) mit dem Behälter durch einen Träger (8) verbunden ist, wobei eine starre Verbindung mit dem Träger durch einen Lagerzapfen (9) zusammenwirkt, der in dem Träger (8) schwingt, wobei die Schwingungen entlang einer Achse stattfinden, die zur Tangente an der starren Verbindung (7) am Punkt des Auftreffens der letzteren auf den Lagerzapfen (9) im wesentlichen senkrecht ist.

9. Vorrichtung nach Anspruch 8, **dadurch gekennzeichnet, daß** das Ende der starren Verbindung (7) in ein mit Gewinde versehenes Loch geschraubt ist, das in dem Lagerzapfen (9) ausgebildet ist, wobei das Loch zur Drehachse des Lagerzapfens im wesentlichen senkrecht ist.

10. Vorrichtung nach einem der vorangehenden Ansprüche, **dadurch gekennzeichnet, daß** eine starre Verbindung (7) mit der Schale (6) durch einen Lagerzapfen (10) zusammenwirkt, der in einer Muffe (11) schwingt, die mit der Schale verbunden ist, wobei die Schwingungen entlang einer Achse stattfinden, die zur Tangente an der starren Verbindung (7) am Punkt des Auftreffens der letzteren auf den Lagerzapfen (10) im wesentlichen senkrecht ist.

11. Vorrichtung nach Anspruch 10, **dadurch gekennzeichnet, daß** das Ende der starren Verbindung (7) in ein mit Gewinde versehenes Loch geschraubt ist, das in dem Lagerzapfen (10) ausgebildet ist, wobei das Loch zur Drehachse des Lagerzapfens im wesentlichen senkrecht ist.

12. Vorrichtung nach einem der Ansprüche 10 oder 11, **dadurch gekennzeichnet, daß** die Schale (6) eine Öffnung (66) aufweist, um das Ende der starren Verbindung (7) hindurchtreten zu lassen.

13. Vorrichtung nach einem der Ansprüche 10 bis 12, **dadurch gekennzeichnet, daß** ein Ring (67) zum Einklemmen der Muffen (11) dient, die mit den Lagerzapfen (10) zusammenwirken.

14. Vorrichtung nach Anspruch 13, **dadurch gekennzeichnet, daß** der Ring (67) Einschnürungen (68) aufweist, um den Durchgang der Muffen (11) bei ihrer Montage zu ermöglichen.

15. Vorrichtung nach einem der vorangehenden Ansprüche, **dadurch gekennzeichnet, daß** sie eine Glocke (13) aufweist, mit der das ausgestoßene Element (1) versehen ist, welche den Stoß beim Auftreffen des Elements (1) an der Schale (6) dämpfen soll.

16. Vorrichtung nach Anspruch 15, **dadurch gekennzeichnet, daß** die Glocke (13) geschlitzt ist.

17. Vorrichtung nach einem der vorangehenden Ansprüche, **dadurch gekennzeichnet, daß** die Schale eine Umlaufaushöhlung (60) aufweist, deren Öffnung zum ausgestoßenen Element (1) entgegengesetzt liegt.

18. Vorrichtung nach einem der vorangehenden Ansprüche, **dadurch gekennzeichnet, daß** die Schale (6) eine innere Form eines Trichters (64) aufweist.

19. Vorrichtung nach Anspruch 18, **dadurch gekennzeichnet, daß** ein zylindrischer Teil über seine Basis (63) als Ende des Trichters (64) hinausragt.

20. Vorrichtung nach einem der vorangehenden Ansprüche, **dadurch gekennzeichnet, daß** der Abschnitt (61) der Schale eine abgerundete Spitze (62) gegenüber dem Element (1) aufweist.

21. Vorrichtung nach Anspruch 20, **dadurch gekennzeichnet, daß** die Abschnitte (65) der Schale, die von der Basis (63) zur Spitze (62) verlaufen, geradlinig sind.

22. Vorrichtung nach einem der vorangehenden Ansprüche, **dadurch gekennzeichnet, daß** wenn die Antriebsvorrichtung (3) in einem Behälter (4) angeordnet ist, die starren Verbindungen (7) unter leichter Spannung stehen und an ihren Trägern (8), die am Behälter (4) befestigt sind, anliegen.

23. Vorrichtung nach einem der vorangehenden Ansprüche, **dadurch gekennzeichnet, daß** das Element (1) der Zünder ist.

24. Vorrichtung nach Anspruch 23, **dadurch gekennzeichnet, daß** das Übertragungskabel für den Zündbefehl durch die Schale (6) verläuft.

25. Vorrichtung nach einem der vorangehenden Ansprüche, **dadurch gekennzeichnet, daß** die pyrotechnische Antriebsvorrichtung das Triebwerk eines Flugkörpers (3) ist.
